# EUROPEAN PATENT APPLICATION

(11) **EP 3 477 070 A1**
(43) Date of publication of application: **01.05.2019**
(21) Application number: 18275154.5
(22) Date of filing: 02.10.2018
(51) Int. Cl.: F01P 7/16, F16K 7/02, F16K 31/00, G05D 23/02

(54) **A TEMPERATURE RESPONSIVE LIQUID FLOW REGULATOR**

(30) Priority: 31.10.2017 GB 201717972
(71) Applicant: Ford Global Technologies, LLC, Dearborn, MI 48126 (US)
(72) Inventor: Leck, Chris, Enfield, Middlesex EN2 7EJ (GB); Scholtes, Duncan, London, TW12 2TJ (GB)
(74) Representative: Hilton, Andrew Steven

(57) **Abstract**

A temperature responsive liquid flow regulator 100 is disclosed having a temperature responsive regulator member 110 formed by a continuous hollow ring 107 filled with a regulator material 120 having a predefined state change temperature. A change in state from solid to liquid of the regulator material 120 is used to reduce the diameter of an orifice 111 defined by the hollow ring 107 thereby producing a simple temperature responsive flow control means of varying flow area.

## Description

This invention relates to controlling the flow of liquid through a passage and, in particular, to a temperature responsive flow regulator for controlling the flow of liquid through a passage.

It is an object of this invention to provide a temperature responsive flow regulator of simple and economical construction.

According to a first aspect of the invention there is provided a temperature responsive liquid flow regulator comprising a temperature responsive regulator member held captive within a passage so as to define a variable diameter orifice through which a liquid flows in use, the temperature responsive regulator member comprising a continuous resilient hollow ring defining the variable diameter orifice having a flexible wall defining a chamber within the hollow ring that is filled with a regulator material having a predefined state change temperature characterised in that, when the temperature of the liquid in the passage is lower than the predefined state change temperature the regulator material is in a solid state and a diameter of the orifice is at a maximum and, when the temperature of the liquid in the passage is higher than the predefined state change temperature, the regulator material transforms into a liquid state and the diameter of the orifice is less than the maximum diameter and that a flow area corresponding to the diameter of the orifice reduces in proportion to the increase in temperature of the liquid above the predefined state change temperature until a minimum flow area corresponding to a minimum diameter of the orifice is reached.

The regulator material may be a wax based material.

The continuous hollow ring may be made from one of rubber and elastomer.

The continuous hollow ring may be a toroidal in shape.

The continuous hollow ring may be circular in cross-section when the regulator material is in the solid state.

The minimum flow area may be substantial equal to zero.

According to a second aspect of the invention there is provided a motor vehicle liquid cooling system having a conduit defining a liquid flow passage and a temperature responsive liquid flow regulator constructed in accordance with said first aspect of the invention to regulate the flow of liquid through the conduit based upon the temperature of the liquid flowing through the conduit.

The liquid cooling system may be an engine cooling system and the liquid is engine coolant.

The conduit may be a radiator bypass passage and the temperature responsive liquid flow regulator may control the flow of coolant through the radiator bypass passage.

Alternatively, the conduit may be a supply conduit to an automatic transmission warm up unit and the temperature responsive liquid flow regulator may control the flow of coolant through the supply conduit.

As yet another alternative, the conduit may be a return conduit from an automatic transmission warm up unit and the temperature responsive liquid flow regulator may control the flow of coolant through the return conduit.

The invention will now be described by way of example with reference to the accompanying drawing of which:-
Fig.1a is a cross-section through a temperature responsive liquid flow regulator showing a temperature responsive regulator member in a minimum flow restricting state;
Fig.1b is an end view of the temperature responsive regulator member shown in Fig.1a;
Fig.2 is a cross-section similar to Fig.1a but showing the temperature responsive regulator member in a maximum flow restricting state;
Fig.3 is a schematic diagram of part of a prior art motor vehicle engine cooling system including a combined thermostat and bypass valve;
Fig.4 is a schematic diagram of part of a motor vehicle in accordance with a first embodiment of a second aspect of the invention showing the use of a temperature responsive liquid flow regulator in accordance with the first aspect of the invention;
Fig.5 is a schematic diagram of part of a prior art motor vehicle engine cooling system including a three way valve for controlling flow to an automatic transmission warm up unit;
Fig.6 is a schematic diagram of part of a motor vehicle in accordance with a second embodiment of the second aspect of the invention showing the use of a temperature responsive liquid flow regulator in accordance with the first aspect of the invention; and
Fig.7 is a cross-section through an alternative embodiment of a flow regulator according to the invention.

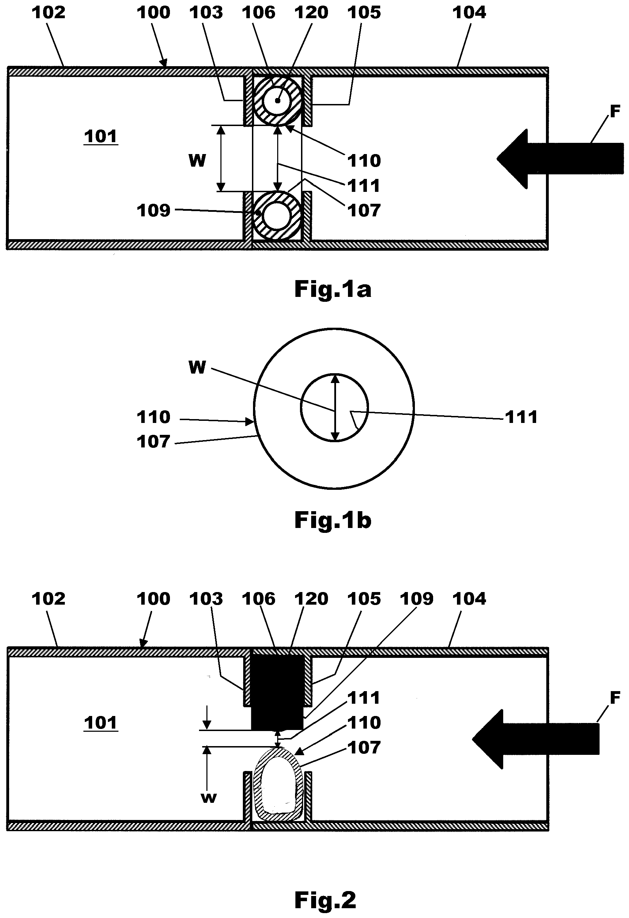

With reference to Figs.1a to 2 which are diagrammatic in nature there is shown a temperature responsive liquid flow regulator 100 having a temperature responsive regulator member 110 held captive within a liquid flow passage 101 by a pair of inwardly directed annular flanges 103, 105 so as to define an orifice 111 through which liquid flows in use. The direction of liquid flow through the passage 101 is indicated by the arrow F on Figs.1a and 2 but it will be appreciated that the temperature responsive liquid flow regulator 100 will work in the same manner irrespective of direction of flow through the passage 101.

The flow regulator 100 in the case of this example comprises of first and second tubular members 102, 104 which in combination define the liquid flow passage 101. A first one 103 of the pair of inwardly directed annular flanges 103, 105 is formed as an integral part of the first tubular member 102 and a second one 105 of the pair of inwardly directed annular flanges 103, 105 is formed as an integral part of the second tubular member 104. It will be appreciated that the invention is not limited to such an arrangement of tubular members and flanges and that other arrangements for holding the temperature responsive regulator member 110 captive in a liquid flow passage could be used.

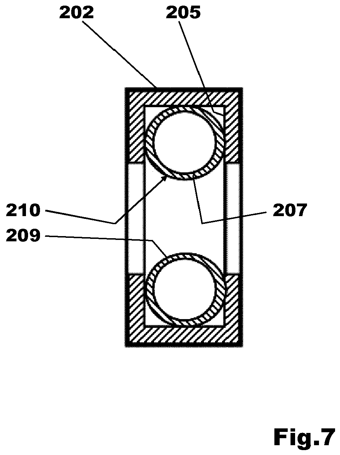

For example, the temperature responsive regulator member could be fitted into an internal circumferential groove in a tube. Fig.7 shows such an arrangement in which the tube is referenced as 202, the groove is referenced as 205 and the temperature responsive regulator member is referenced as 210 having a hollow ring 207 with a flexible wall 209.

The temperature responsive regulator member 110 comprises a continuous hollow ring 107 made from a resilient material having a flexible wall 109 defining a variable diameter orifice and a chamber 106 within the hollow ring 107. The chamber 106 is substantially filled with a regulator material 120 having a predefined state change temperature falling within a predefined temperature range such as, for example, 90 to 120°C. In the case of the preferred embodiment shown in Figs.1a to 2, the regulator member 110 is toroidal in shape.

When the regulator material 120 is in a solid state the regulator member 110 is circular in cross-section and when the regulator material 120 is in a liquid state the regulator member 110 is deformed from the circular cross-sectional shape to a flattened oval in cross-section. However, it will be appreciated that other original and final cross-sectional shapes are possible.

It will be appreciated that an outer circumference of the hollow ring 107 abuts and reacts against an inner surface of the second tubular member 104 and so the hollow ring 107 is deformed primarily inwardly when the regulator material 120 expands.

The hollow ring 107 is made from a flexible material such as rubber or elastomer so that it can be deformed by the regulator material 120 located in the chamber 106 when the regulator material undergoes a state change from solid to liquid.

The regulator material 120 in the case of this example is in the form of a wax based material. It will be appreciated that by blending two or more waxes the temperature at which the resultant wax based material will change state from solid to liquid known as the "state change temperature" can be customised to occur within the predefined temperature range. Alternatively, a single wax can be used having a state change temperature required for the intended use.

When the regulator material 120 melts due to its temperature exceeding its state change temperature, the resulting expansion of the regulator material 120 causes the cross-sectional shape of the hollow ring 107 to change due to increased pressure in the chamber 106 so as to adopt the flattened oval cross-section shape as shown in Fig.2.

This change in cross-sectional shape from circular to a flattened oval has the effect of reducing the diameter of the orifice 111 defined by the hollow ring 107 from a maximum diameter 'W' when the regulator material 120 is in the solid state (Figs.1a and 1b) to a minimum diameter 'w' (Fig.2) when the regulator material 120 is in the liquid state. It will be appreciated that the forces produced by the regulator material 120 are counteracted by tension forces in the flexible wall 109 of the hollow ring 107 due to the expansion of the regulator material 120 and that eventually a force balance is achieved which corresponds to the minimum diameter 'w' of the orifice 111. By balancing these forces in a predefined manner with respect to temperature, a flow area corresponding to the diameter of the orifice 111 is arranged to reduce in proportion to the increase in temperature of the liquid above the predefined state change temperature until a minimum flow area corresponding to a minimum diameter 'w' of the orifice 111 is reached.

It will be appreciated that the orifice 111 provides a maximum flow area when the diameter of the orifice 111 is at the maximum diameter "W" and the regulator material 120 is in the solid state and provides a minimum flow area when the diameter of the orifice 111 is at the minimum diameter "w".

Therefore the temperature responsive regulator member 110 acts so as to regulate the flow of liquid through the passage 101 based upon temperature. It will be appreciated that the flow regulator could be designed such that the minimum flow area is substantially zero when the minimum orifice diameter "w" is substantially equal to zero.

It will be appreciated that when the temperature of the regulator material 120 changes from a temperature lower than the state change temperature to a temperature higher than the state change temperature the regulator material 120 will melt and expand. It will be appreciated that the coefficient of thermal expansion of a wax based regulator material during such a solid to liquid state change is often an order of magnitude greater than the normal coefficient of thermal expansion for such a material.

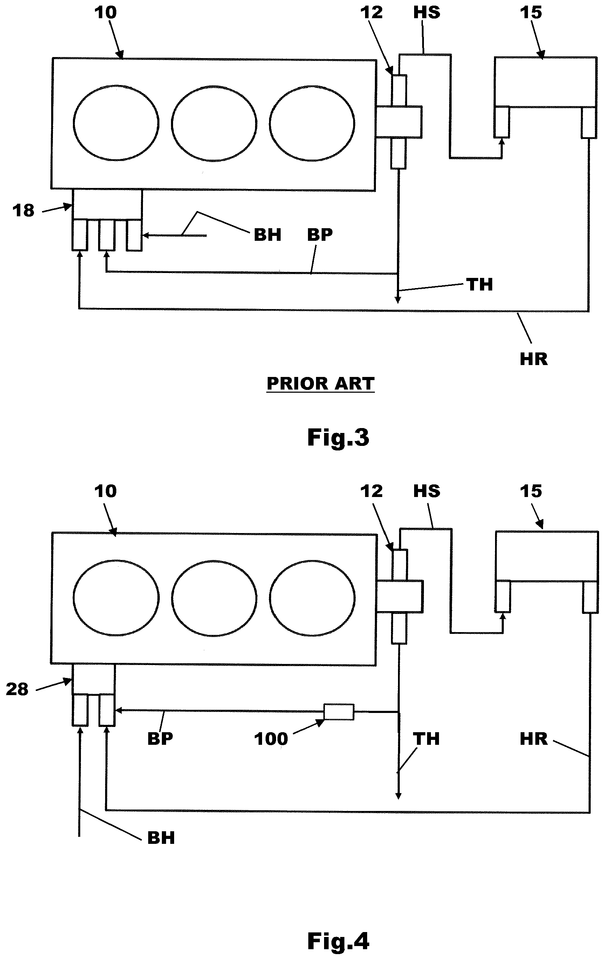

In operation the temperature responsive liquid flow regulator 100 is placed in a flow path of liquid that requires regulation based upon temperature. Two nonlimiting examples of such use are described hereinafter with reference to Figs.3 to 6.

When the temperature of the liquid flowing through the passage 101 which forms part of the liquid flow path is lower than the predefined state change temperature of the regulator material 120 the regulator material 120 is in a solid state and the flow area of the orifice 111 will be at a maximum thereby producing minimum restriction to the flow of liquid through the passage 101. It will be appreciated that the temperature of the liquid flowing through the orifice 111 defined by the hollow ring 107 will directly affect the temperature of the regulator material 120 due to heat conduction through the flexible wall 109 of the hollow ring 107.

When the temperature of the liquid flowing through the orifice 111 is increased to a temperature higher than the predefined state change temperature of the regulator material 120 the regulator material 120 will transforms into the liquid state and the flow area of the orifice 111 reduces in proportion to the increase in temperature of the liquid above the predefined state change temperature of the regulator material 120 until a minimum flow area is reached.

By arranging the state change temperature of the regulator material 120 to be substantially at a desired control temperature, the temperature responsive liquid flow regulator 100 can be used to control or regulate the flow of liquid in a simple manner based upon the temperature of the liquid flowing therethrough.

With reference to Fig.3 there is shown part of a prior art motor vehicle engine cooling system. The cooling system comprises in this case an engine 10, a coolant circulation pump (not shown), a radiator (not shown), a heater flow control valve 12, a cabin heater 15 and a combined bypass and thermostat 18. Coolant flows in the direction shown via a bottom hose BH connected from the radiator to the combined bypass and thermostat 18. Coolant flows back to the radiator via a top hose return TH connected to one outlet from the heater flow control valve 12. A radiator bypass passage BP is arranged to bypass the radiator and is connected between the top hose return TH and a bypass inlet of the combined bypass and thermostat valve 18. The cabin heater 15 is connected to the heater flow control valve 12 by a heater supply hose HS and is connected via a heater return hose HR to an inlet of the combined bypass and thermostat 18.

As is well known in the art, the heater flow control valve 12 is used to regulate the flow of coolant through the cabin heater 15.

The combined bypass and thermostat valve 18 is arranged such that after a main thermostat valve of the combined bypass and thermostat valve 18 has opened a bypass valve member also forming part of the combined bypass and thermostat 18 is moved to a closed position. This closing of the bypass valve normally occurs when the temperature of the coolant is approximately 5 to 10 degrees Celsius higher than the opening temperature of the main thermostat valve.

The effect of this opening and closing of bypass valve is to allow coolant to bypass the radiator during initial warm-up of the engine 10 when the bypass valve is in an open position but then restrict or prevent the flow of coolant through the bypass passage BP at higher temperatures so as to ensure that most of the coolant passes through the radiator thereby maximising cooling of the coolant.

One of the problems with such an arrangement is that the construction of such a combined bypass and thermostat is relatively complex in construction in order to get the two valves to function correctly when subject to a potentially mixed coolant flow and is difficult to package in a single compact unit. One example of such a combined bypass and thermostat and its use is disclosed in GB Patent 2,320,552.

With reference to Fig.4 there is shown a first use for the temperature responsive liquid flow regulator 100 previously described as part of a motor vehicle engine cooling system of the type previously described with reference with respect to Fig.3 with the exception that the combined bypass and thermostat is replaced by a simple thermostat 28 and the temperature responsive liquid flow regulator 100 is placed in the bypass passage BP.

The temperature responsive liquid flow regulator 100 is designed to allow the flow of coolant from the top hose return TH through the radiator bypass passage BP to the thermostat 28 below a predefined temperature and restrict the flow through the radiator bypass passage BP above this temperature by using a regulator material that changes state substantially at the predefined temperature.

By using such an arrangement there is no need to link the control of flow through the bypass passage BP to the opening and closing of the thermostat valve and so more flexibility of design of the engine thermal management system can be provided. In addition, the thermostat can be of a simple more compact and hence easier to package and of a more economical design as it only has one function and not two to perform.

It will also be appreciated that such a temperature responsive liquid flow regulator has no moving parts to wear or potentially become jammed.

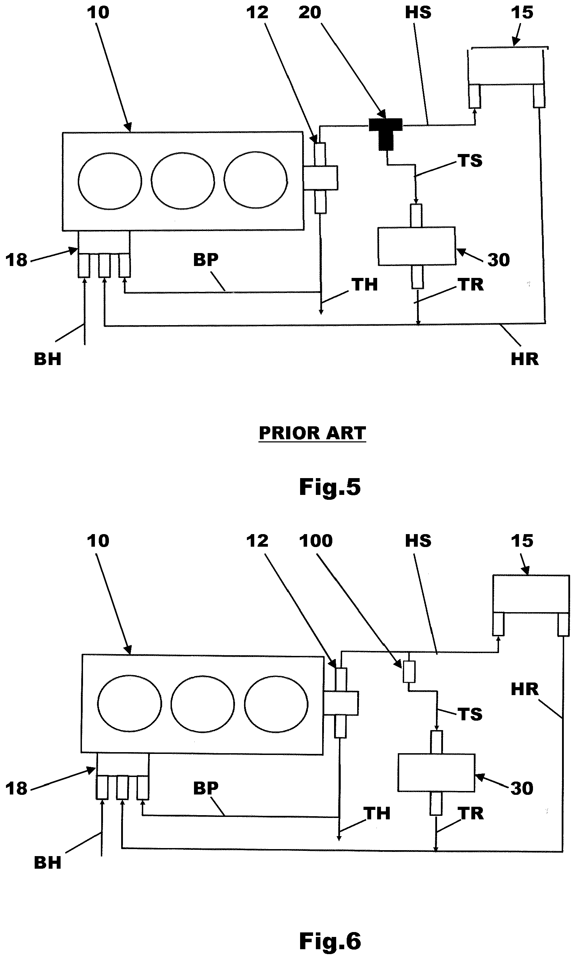

With reference to Fig.5 there is shown part of a second embodiment of a prior art motor vehicle engine cooling system. As before, the cooling system comprises an engine 10, a coolant circulation pump (not shown), a radiator (not shown), a heater flow control valve 12, a cabin heater 15 and a combined bypass and thermostat 18 but, in addition, includes a three way electronically controlled valve 20 and an automatic transmission warm up unit 30.

The three way valve 20 is located in the coolant flow path from the heater flow control valve 12 to the cabin heater 15 and is arranged to control the flow of coolant to the automatic transmission warm up unit 30 that is used to warm up oil used in an automatic transmission of the motor vehicle following a cold start.

General operation of the cooling system is substantially as previously described with respect to Fig.3 and so is not described again in detail.

In the case of this embodiment, during engine warm up following a cold start the three way valve 20 allows coolant to flow via a transmission warm up supply conduit TS to the transmission warm up unit 30. The coolant is returned from the automatic transmission warm up unit 30 via a return conduit TR to the heater return hose HR.

When the transmission has warmed up sufficiently the three way valve 20 closes and coolant can no longer flow to the transmission heater warm up unit 30.

With reference to Fig.6 there is shown a second use for the temperature responsive liquid flow regulator 100 previously described as part of a motor vehicle engine cooling system. The cooling system arrangement is substantially as previously described with reference with respect to Fig.5 with the exception that the three way electronically controlled valve 20 is replaced by a temperature responsive liquid flow regulator 100. The temperature responsive liquid flow regulator 100 is positioned in the supply conduit TS to the automatic transmission warm up unit 30.

The temperature responsive liquid flow regulator 100 is designed to allow the flow of coolant from the heater supply hose HS to the automatic transmission warm up unit 30 below a predefined temperature and restrict the flow above this temperature by using a regulator material that changes state substantially at the predefined temperature.

By using such an arrangement a simple more economical arrangement is provided that does not require the use of relatively expensive electronically controlled valve or an electronic controller to control such a valve. A further advantage is that the temperature responsive liquid flow regulator is self controlling based upon coolant temperature.

It will be appreciated that the temperature responsive liquid flow regulator 100 could be located in the return conduit TR from the automatic transmission warm up unit 30 rather than the supply conduit TS if so required.

It will also be appreciated that the use of a temperature responsive liquid flow regulator 100 as shown and described with respect to Fig.4 could be combined with the use of a temperature responsive liquid flow regulator 100 as shown and described with respect to Fig.6 in a single engine cooling system.

It will also be appreciated that a temperature responsive liquid flow regulator such as the temperature responsive liquid flow regulator 100 could be used in other applications where the flow of liquid based upon temperature is required within a temperature range suitable for use of such a regulator material and that the invention is not limited to the two example uses described above.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A temperature responsive liquid flow regulator (100) comprising a temperature responsive regulator member (110; 210) held captive within a passage (101) so as to define a variable diameter orifice (111) through which a liquid flows in use, the temperature responsive regulator member (110; 210) comprising a continuous resilient hollow ring (107; 207) defining the variable diameter orifice (111) having a flexible wall (109; 209) defining a chamber (106) within the hollow ring (107; 207) that is filled with a regulator material (120) having a predefined state change temperature **characterised in that**, when the temperature of the liquid in the passage (101) is lower than the predefined state change temperature the regulator material (120) is in a solid state and a diameter of the orifice (111) is at a maximum (W) and, when the temperature of the liquid in the passage (101) is higher than the predefined state change temperature, the regulator material (120) transforms into a liquid state and the diameter of the orifice (111) is less than the maximum diameter (W) and that a flow area corresponding to the diameter of the orifice (111) reduces in proportion to the increase in temperature of the liquid above the predefined state change temperature until a minimum flow area corresponding to a minimum diameter (w) of the orifice (111) is reached.

2. A flow regulator as claimed in claim 1 wherein the regulator material (120) is a wax based material.

3. A flow regulator as claimed in claim 1 or in claim 2 wherein the continuous hollow ring (107) is made from one of rubber and elastomer.

4. A flow regulator as claimed in any of claims 1 to 3 wherein the continuous hollow ring (107) is a toroidal in shape.

5. A flow regulator as claimed in any of claims 1 to 4 wherein the continuous hollow ring (107) is circular in cross-section when the regulator material (120) is in the solid state.

6. A flow regulator as claimed in any of claims 1 to 5 wherein the minimum flow area is substantial equal to zero.

7. A motor vehicle liquid cooling system having a conduit defining a liquid flow passage (BP; TS; TR) and a temperature responsive liquid flow regulator (100) as claimed in any of claims 1 to 6 to regulate the flow of liquid through the conduit (BP; TS; TR) based upon the temperature of the liquid flowing through the conduit (BP; TS; TR).

8. A motor vehicle as claimed in claim 7 wherein the liquid cooling system is an engine cooling system and the liquid is engine coolant.

9. A motor vehicle as claimed in claim 8 wherein the conduit is a radiator bypass passage (BP) and the temperature responsive liquid flow regulator (100) controls the flow of coolant through the radiator bypass passage (BP).

10. A motor vehicle as claimed in claim 7 wherein the conduit is supply conduit (TS) to an automatic transmission warm up unit (30) and the temperature responsive liquid flow regulator (100) controls the flow of coolant through the supply conduit (TS).

11. A motor vehicle as claimed in claim 7 wherein the conduit is return conduit (TR) from an automatic transmission warm up unit (30) and the temperature responsive liquid flow regulator (100) controls the flow of coolant through the return conduit (TR).
